# EUROPÄISCHE PATENTSCHRIFT

(11) **EP 2 161 182 B1**
(45) Veröffentlichungstag und Bekanntmachung des Hinweises auf die Patenterteilung: **15.06.2011**
(21) Anmeldenummer: 09167345.9
(22) Anmeldetag: 06.08.2009
(51) Int. Cl.: B62D 53/00, B62D 63/06, B60P 1/64, B62B 3/02, B64F 1/32

(54) **Trailerzuganhänger**
Trailer
Remorque de ferroutage

(30) Priorität: 06.09.2008 DE 102008046165; 06.12.2008 DE 102008060962
(43) Veröffentlichungstag der Anmeldung: 10.03.2010
(73) Patentinhaber: Bayerische Motoren Werke Aktiengesellschaft, 80809 München (DE); LR Intralogistik GmbH, 84079 Bruckberg (DE)
(72) Erfinder: Gailer, Markus, 93083 Oberhinkofen (DE); Berghammer, Fritz, 84079 Bruckberg (DE)
(74) Vertreter: Gustorf, Gerhard

(56) Entgegenhaltungen:
- EP-A1- 1 352 815
- EP-A1- 1 743 828

## Beschreibung

Die Erfindung betrifft einen Trailerzuganhänger mit einem rollengefiihrten Rahmen und einem im Trailerzug mitgeführten und auf Lenkrollen niveaugleich zu den rahmenseitigen Führungsrollen in den Anhänger ein- und aus diesem ausschiebbaren Innenwagen zur Aufnahme von Transportgütern nach dem Oberbegriff des Patentanspruchs 1.

Bei Trailerzuganhängern dieser Art, wie sie etwa aus DE 603 00 189 T2 bekannt sind, sind die Innenwagen unabhängig vom Rahmengestell des Anhängers auf innenwagenseitigen Lenkrollen verfahrbar, um so die Anhänger auf einfache Weise, nämlich ohne Zuhilfenahme eines Gabelstaplers oder eines ähnlichen Hebezeugs, mit den Innenwagen be- bzw. entladen zu können. In der Transportlage am Anhänger werden die Innenwagen am Anhängerrahmen verriegelt und laufen dann, geführt vom Anhängerrahmen, auf ihren Lenkrollen im Zugverbund mit. Derartige Trailerzüge, die zum Gütertransport z. B. im Werksgelände eingesetzt werden, sind im Allgemeinen nicht schienengeführt; dabei stellt sich das Problem, dass einzelne Anhänger im Zugverbund zusammen mit den mitgeführten Innenwagen, insbesondere beim Durchfahren engerer Kurven, aus der Fahrspur ausbrechen.

In DE 199 58 086 A1 ist ein Transportsystem für die staplerlose Versorgung beschrieben und dargestellt, bei dem ein Wagen mit einem im Grundriss C-förmigen Rahmen eine Mehrzahl von Aufnahmevorrichtungen trägt. Diese sind im Bereich einer seitlichen "Brücke" an jeweils einem eigenen Hubschlitten befestigt, welcher in einer Vertikalführung relativ zu der Brücke und damit des fahrbaren Rahmens höhenverstellbar geführt ist.

Ein ähnliches Transportsystem zeigt DE 10 2007 032 056 A1, aus der ein Anhänger mit einem Portaltragwerk bekannt ist, dessen Bodenplatte durch ein Hubwerk abgesenkt wird, um eine Beladung zu ermöglichen. Anschließend wird die Bodenplatte mittels des Hubwerks in die Transportlage angehoben. Der Rahmen (Portaltragwerk) ändert dabei seine Vertikalstellung nicht.

Gegenstand von DE 20 2006 019 637 U1 ist ein selbstlenkendes Anhänger-Zugsystem mit einem Rahmen in Form eines Portals, das auf einem vorderen und einem hinteren Fahrwerk mit Achsschenkellenkung ruht. An den beiden vertikalen Säulen des Portalrahmens ist jeweils eine Tragschiene angebracht, die über ein Hubspindelgetriebe relativ zum Rahmen angehoben werden kann.

Der Erfindung liegt die Aufgabe zugrunde, einen Trailerzuganhänger der eingangs genannten und aus DE 603 00 189 T2 bekannten Bauart so auszubilden, dass er selbst bei engen Kurvenfahrten und beim Transport voll beladener Innenwagen ein hochgradig spursicheres Fahrverhalten im Zugverbund besitzt.

Diese Aufgabe wird erfindungsgemäß durch den im Patentanspruch 1 gekennzeichneten Trailerzuganhänger gelöst.

Gegenüber dem gattungsbildenden Stand der Technik wird das Gewicht des Innenwagens und seiner Beladung im Trailerzugverbund nicht mehr über die innenwagenseitigen Lenkrollen auf dem Fahrweg abgesetzt, sondern von dem Anhängerrahmen und den rahmenseitigen Führungsrollen aufgenommen. Die Bodenhaftung der Führungsrollen, die sich sonst nach dem vergleichsweise geringen Eigengewicht des Anhängers bestimmt und nicht ausreicht, den auf den Anhänger einwirkenden, hauptsächlich fliehkraftbedingten Seitenkräften des auf den Lenkrollen mitlaufenden Innenwagens standzuhalten, wird auf diese Weise durch die vom Innenwagen aufgebrachte Zusatzlast so weit erhöht, dass sich selbst enge Kurven mit unverminderter Geschwindigkeit unabhängig von der Höhe der Zuladung spursicher durchfahren lassen.

Eine baulich besonders einfache Ausgestaltung der Erfindung wird dadurch erreicht, dass der Innenwagen einschließlich der Lenkrollen aus der Einschub- in die Transportlage anhebbar und die entsprechende Hubeinrichtung ein fester Bestandteil des Anhängers ist.

Aus Gründen einer hohen Transportsicherheit empfiehlt es sich, den Innenwagen in der Transportlage in unmittelbarem Flächenkontakt mit dem Anhängerrahmen zu halten. Zu diesem

Zweck ist gemäß der Erfindung die Hubeinrichtung zwischen der Drehachse der rahmenseitigen Führungsrollen und dem Anhängerrahmen angeordnet, so dass diese gemeinsam mit dem Innenwagen in die Transportlage angehoben wird.

Ebenfalls aus Sicherheitsgründen, aber auch im Hinblick auf eine bedienerfreundliche Betätigung der Hubeinrichtung ist diese zweckmäßigerweise fremdkraftbetrieben und gemeinsam mit den Hubeinrichtungen sämtlicher Anhänger des Trailerzugs von der Zugmaschine aus zentral steuerbar.

In weiterer, besonders bevorzugter Ausgestaltung der Erfindung wird der Innenwagen zusätzlich zu dem erwähnten Flächenkontakt in der Transportlage am Anhängerrahmen auch noch durch einen Verriegelungsmechanismus lagefest gesichert und dieser ist, wie nach Anspruch 3 bevorzugt, beim Einschieben des Innenwagens in den Anhänger selbsttätig in die Verriegelungslage verstellbar und zur Entnahme des Innenwagens pedalbetätigt freischaltbar.

Um die Anhänger zum Ein- oder Ausschieben der Innenwagen nicht vom Trailerzug abkoppeln zu müssen, sind die Anhängerrahmen nach Anspruch 4 zweckmäßigerweise seitlich geöffnet und der Innenwagen ist in der abgesenkten Hublage auf den innenwagenseitigen Lenkrollen über die seitliche Rahmenöffnung in und aus dem Anhänger verfahrbar.

Die Erfindung wird nunmehr anhand eines bevorzugten Ausführungsbeispiels in Verbindung mit den Zeichnungen näher erläutert. Es zeigen in stark schematisierter Darstellung:
- Fig. 1: eine perspektivische Darstellung eines Trailerzuganhängers einschließlich eines von diesem getrennten Innenwagens;
- Fig. 2a, b: die Ansicht des Trailerzuganhängers im abgesenkten Zustand nach der Entnahme des Innenwagens (a) und in der Transportlage mit angehobenem Innenwagen (b); und
- Fig. 3: eine Seitenansicht des Anhängers in der in Figur 2b gezeigten Transportlage.

Der in den Figuren dargestellte, einachsige Trailerzuganhänger 1 enthält einen seitlich geöffneten, E-förmigen Rahmen 2 mit Führungsrollen 3, welche am mittleren Querträger 4 des Anhängerrahmens 2 auf einer starren Achse 5 unabhängig voneinander drehbar angeordnet sind. Über eine rahmenfeste Zugstange 6 wird der Anhänger 1 um die Hochachse schwenkbar, jedoch kippfest mit einem vorausgehenden Anhänger oder der Zugmaschine des Trailerzugs verkoppelt und im entkoppelten Zustand durch einen Stützfuß 7 lagefest gesichert.

Im Trailerzugverbund dient der Anhänger 1 zum Gütertransport z. B. im Werksgelände. Zu diesem Zweck wird das Transportgut in einem vom Anhänger 1 mitgefiihrten Innenwagen 8 aufgenommen, welcher mit sich selbsttätig ausrichtenden Lenkrollen 9 versehen ist, so dass er ohne Zuhilfenahme eines Gabelstaplers oder eines sonstigen Hebezeugs seitlich in den Anhänger 1 ein- und aus diesem ausgefahren und dann von diesem getrennt an einer Übergabestation be- oder entladen werden kann, während der Anhänger 1 im Zugverbund verbleibt.

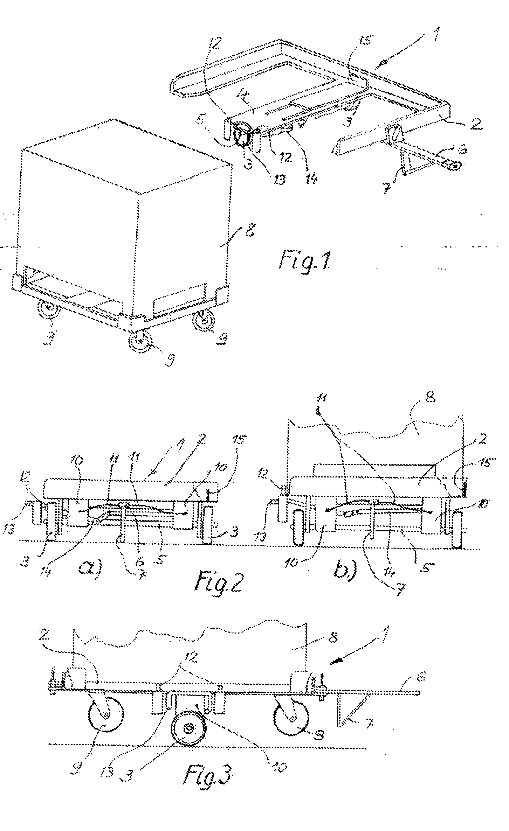

In der Transportlage des Innenwagens 8 werden der Anhängerrahmen 2 und unter flächiger Auflage auf dem Rahmen 2 auch der Innenwagen 8 durch zwischen Rahmen 2 und Starrachse 5 wirkende Druckstempel 10 so weit angehoben, dass die Lenkrollen 9 des Innenwagens 8 von der Fahrbahn freikommen (Figuren 2b und 3). Auf diese Weise wird das Gewicht des Innenwagens 8 und seiner Beladung nicht mehr über die Lenkrollen 9 des Innenwagens 8, sondern über die Bockrollen 3 des Anhängers 1 auf die Fahrbahn übertragen. Dadurch werden die Bodenhaftung und demzufolge auch die Spurstabilität des Anhängers 1 beim Transport des Innenwagens 8 im Zugverbund deutlich erhöht.

Die Betätigung der Druckstempel 10, die vorzugsweise pneumatisch betrieben werden, erfolgt über eine Versorgungsleitung 11, welche zusammen mit dem Ankuppeln der Zugstange 6 an die Versorgungsleitung 11 des vorausgehenden Anhängers 1 und bei dem im Zugverbund vordersten Anhänger 1 an die Zugmaschine des Trailerzugs angeschlossen wird. Dadurch können die Druckstempel 10 sämtlicher Anhänger 1 im gesamten Zugverbund von der Zugmaschine aus gemeinsam ausgefahren bzw. zur Auf- oder Entnahme eines oder mehrerer Innenwagen 8 abgesenkt werden.

Beim Transport werden die Innenwagen 8 am Anhänger 1 durch höhenverstellbare Sicherungselemente 12 lagefest verriegelt. In der abgesenkten Hublage des Anhängerrahmens 2 (Fig. 2a) lassen sich die Sicherungselemente 12 durch einen Fußhebel 13 in die Freigabestellung niederfahren, so dass der Innenwagen 8 - nunmehr auf den Lenkrollen 9 - ungehindert aus dem Anhänger 1 ausgeschoben werden kann, wobei die Ausschubbewegung in der Anfangsphase durch einen mit den Sicherungselementen 12 über ein Gestänge 14 gekoppelten Auswerfer 15 bewirkt oder unterstützt wird. Die Sicherungselemente 12 und der Auswerfer 15 verbleiben in der Freigabestellung, bis der Anhänger 1 erneut mit einem Innenwagen 8 belegt wird. Dabei werden der Auswerfer 15 durch den Innenwagen 8 wieder in die Endlage (Fig. 2b) zurückgeschoben und gleichzeitig die Sicherungselemente 12 auf dem Weg über das Gestänge 14 in die Sperrlage hochgefahren, so dass der Innenwagen 8 wiederum lagefest am Anhänger 1 gesichert ist und nach Betätigung der Druckstempel 10 im Zugverbund abtransportiert werden kann.

## Patentansprüche

1. Trailerzuganhänger mit einem rollengefiihrten Rahmen (2) und einem im Trailerzug mitgeführten, mit Lenkrollen (9) versehenen und auf diesen niveaugleich zu den rahmenseitigen Führungsrollen (3) in den Anhänger (1) ein- und aus diesem ausschiebbaren Innenwagen (8) zur Aufnahme von Transportgütern, **dadurch gekennzeichnet, dass** der Innenwagen (8) im Transportzustand des Trailerzugs unter Entlastung der innenwagenseitigen Lenkrollen (9) gewichtsübertragend am Anhängerrahmen (2) und über diesen auf den anhängerseitigen Führungsrollen (3) abgestützt ist, wozu der Anhängerrahmen (2) durch eine zwischen diesem und der Drehachse (5) der anhängerseitigen Führungsrollen (3) angeordnete, anhängerfeste Hubeinrichtung (10) zwischen einer zur Aufnahme des Innenwagens (8) abgesenkten Bereitschaftslage und einer gemeinsam mit diesem angehobenen Transportlage höhenverstellbar ist.

2. Trailerzuganhänger nach Anspruch 1, **dadurch gekennzeichnet, dass** die Hubeinrichtung (10) fremdkraftbetrieben und gemeinsam mit den Hubeinrichtungen sämtlicher Anhänger (1) des Trailerzugs von der Zugmaschine aus zentral gesteuert ist.

3. Trailerzuganhänger nach Anspruch 1 oder 2, **dadurch gekennzeichnet, dass** der Innenwagen (8) in der Einschublage im Anhänger (1) selbsttätig am Anhängerrahmen (2) verriegelt und zur Entnahme des Innenwagens (8) pedalbetätigt freischaltbar ist.

4. Trailerzuganhänger nach einem der vorhergehenden Ansprüche, **dadurch gekennzeichnet, dass** der Anhängerrahmen (2) seitlich geöffnet und der Innenwagen (8) auf den innenwagenseitigen Lenkrollen (9) über die seitliche Rahmenöffnung in den und aus dem Anhänger (1) verfahrbar ist.

## Claims

1. Train trailer comprising a frame (2) movable on rolls (3) and an inner carriage (8) transported inside of said train and provided with casters (9) on which it can be moved into said trailer (1) and drawn out of it when the casters (9) are on the level of said rolls (3), **characterized in that**, when said train is in its transporting condition, the inner carriage (8) is supported on said frame (2) such that the weight of the carriage (8) is borne by said rolls (3) and the casters (9) are relieved, wherein to this end the frame (2) in provided with a lift assembly (10) fastend to the trailer (1) and located between its frame (2) and the axis of rotation (5) of the rolls (3), said lift assembly (10) being suited to vertically move the frame (2) between a lower position ready to receive said inner carriage (8) and an upper transport position.

2. Train trailer according to claim 1, wherein said lift assembly (10) has an independent power drive and is centrally controlled by the traction engine of the train jointly with the lift assemblies of all trailers (1) in said train.

3. Train trailer according to claim 1 or 2, wherein the inner carriage (8) in its position within the trailer (1) is automatically locked on the frame (2) and can be released through a pedal to extract it from the frame (2).

4. Train trailer according to any of the preceding claims, wherein said frame (2) has a lateral opening through which the inner carriage (8) may be moved by means of its casters (9) into the trailer (1) and out of it.

## Revendications

1. Remorque de ferroutage avec un cadre (2) sur roues (3) et un chariot intérieur (8), équipé de roulettes orientables (9), destiné à recevoir une charge à transporter et à être introduit sur le cadre (2) ou à en être retiré dans la position où les roulettes (9) et les roues (3) sont au même niveau, pour être transporté par le train de ferroutage, **caractérisé par le fait que** le chariot intérieur (8) s'appuie en position de transport du train de ferroutage sur le cadre (2) de sorte que les roulettes orientables (9) du chariot intérieur (8) sont soulagées et que le poids est supporté par les roues (3), pour cela le cadre (2) est muni d'un élévateur (10) disposé de façon fixe entre le cadre (2) et l'axe de rotation (5) des roues (3) et apte à déplacer verticalement le cadre (2) entre une position basse pour permettre de recevoir le chariot intérieur (8) et une position haute pour le chariot (8) et le cadre (2) pendant le transport.

2. Remorque de ferroutage selon la revendication 1 **caractérisé par le fait que** l'élévateur (10) est actionné par un système indépendant commandé de façon centrale par le tracteur pour tous les élévateurs (10) des remorques (1) du train de ferroutage.

3. Remorque de ferroutage selon la revendication 1 ou 2 **caractérisé par le fait que** le chariot intérieur (8) est verrouillé automatiquement dans le cadre (2) lorsqu'elle est rentrée dans la remorque (1) tandis qu'il peut être déverrouillé par une pédale pour le ressortir du cadre (2).

4. Remorque de ferroutage selon une des revendications précédentes **caractérisé par le fait que** le cadre (2) est ouvert sur un côté pour que le chariot intérieur (8) puisse être introduit dans la remorque (1) ou en être ressorti sur ses roulettes orientables (9).
